# EUROPEAN PATENT APPLICATION

(11) **EP 4 570 864 A1**
(43) Date of publication of application: **18.06.2025**
(21) Application number: 23307200.8
(22) Date of filing: 13.12.2023
(51) Int. Cl.: C09D 5/00, C09D 4/00, C09D 5/08

(54) **COATING COMPOSITIONS WITH IMPROVED PERFORMANCE**

(71) Applicant: ARKEMA FRANCE, 92800 Puteaux (FR)
(72) Inventor: HE, Yuhong, EXTON, 19341 (US); LI, Ling, EXTON, 19341 (US); BIRIA, Saied, Exton, PENNSYLVANIA 19341 (US)
(74) Representative: Arkema Patent

(57) **Abstract**

A curable composition is described, where the composition comprises, consists essentially of, or consists of a monomer of Formula (1) and a monomer of Formula (2), wherein a molar ratio of the monomer of Formula (1) to the monomer of Formula (2) is at least 1.5:1 and wherein the curable composition is substantially free of water. Also described is the cured composition, a substrate coated by the curable composition and a process for preparing the monomers of Formula (1) and Formula (2). The curable composition is useful to serve as a coating for a battery, especially for the external surface of a battery.

## Description

### BACKGROUND OF THE INVENTION

Phosphate monomers have been reported as contributing to performance in coating compositions for various substrates (e.g., US 4647638, US6710161, US8318848, US7081488, US9273221, US9303160, and US20210347979). However, the potential impact on such performance due to variations in the spacing between the ethylenically unsaturated group on one end of the phosphate monomer and the phosphate moiety on the other end of the monomer has generally not been reported.

In the present invention, it was unexpectedly discovered that altering the spacing between the ethylenically unsaturated group on one end of the phosphate monomer and the phosphate moiety on the other end of the monomer resulted in enhanced coating performance on substrates such as batteries. Such improved performance increases the durability and service life of substrates containing such coating compositions.

### SUMMARY OF THE INVENTION

An aspect of the invention is a curable composition comprising monomers comprising, consisting essentially of, or consisting of a monomer of Formula (1) (a monoester) and a monomer of Formula (2) (a diester) 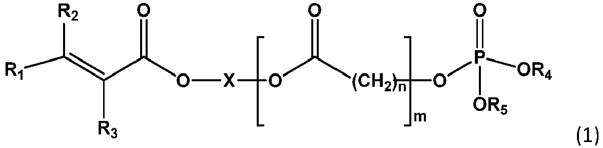 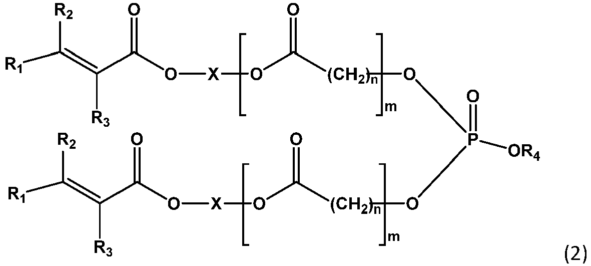 wherein in Formula (1) and Formula (2):
each R₁ is independently H or C₁-C₆ alkyl;
each R₂ is independently H or C₁-C₆ alkyl;
each R₃ is independently H or C₁-C₆ alkyl;
each X is independently C₁-C₆ alkylene, where a N, O or S atom may be inserted between any two carbon atoms present in the alkylene chain and where carbon atoms in the alkylene chain may be substituted with a C₁-C₃ alkyl group;
each R₄ is independently H or a cation;
each R₅ is independently H or a cation;
each n is independently 4 to 7; and
each m is independently 1 to 10,
wherein a molar ratio of the monoester monomer of Formula (1) to the diester monomer of Formula (2) is at least 1.5:1, and
wherein the curable composition is substantially free of water.

Another aspect of the invention is a cured composition formed from the curable composition as described herein.

Another aspect of the invention is a substrate comprising a curable or a cured composition as described herein, on at least one surface of the substrate.

Another aspect of the invention is a method of increasing adhesion and/or corrosion resistance and/or water resistance and/or electric insulation and/or matting and/or flame retardancy and/or weathering resistance of a substrate by applying to at least one surface of a substrate a curable coating composition comprising, consisting essentially of, or consisting of a monomer of Formula (1) and a monomer of Formula (2) as described herein, where the molar ratio of the monomer of Formula (1) to the monomer of Formula (2) is at least 1.5:1.

Another aspect of the invention is a battery (such as an exterior surface of a battery) comprising a curable or a cured composition as described herein where each m is independently 2 to 9, wherein the curable composition is applied onto the battery or the cured composition is coated on the battery.

Another aspect of the invention is the use of the curable composition according to any embodiments described herein for increasing corrosion resistance and/or water resistance and/or adhesion and/or electric insulation and/or matting and/or flame retardancy and/or weathering resistance on each surface of a substrate on which the curable composition is applied.

Another aspect of the invention is the use of a curable composition as described herein as a coating for at least one surface of a substrate.

### DETAILED DESCRIPTION OF THE INVENTION

The term "actinic light source" refers to a source of electromagnetic radiation capable of initiating photochemical reactions with at least a portion of its electromagnetic radiation in the ultra-violet range (100 nm to 400 nm). The actinic radiation may comprise ultra-violet (UV) light, such as light in the UVB and UVC ranges, such as light with a wavelength of from 180 nm to 400 nm, such as from 200 nm to 400 nm or from 200 nm to 320 nm. In embodiments, the actinic radiation range may be produced by a mercury bulb, such as an H-bulb.

The term "curable composition" refers to a composition that changes properties based on a stimulus. Generally, curable compositions as described herein cure through polymerization and/or crosslinking. Generally, those curable compositions cure upon the addition of energy to the system, that energy may come in the form of actinic light, heat, or both. Generally, when compounds in the curable composition contain carbon-carbon double bonds, polymerization (curing) involves the reaction of such carbon-carbon double bonds.

The term "photoinitiator," refers to any type of substance that, upon exposure to radiation (e.g., actinic radiation), forms species that initiate the reaction and curing of polymerizing organic substances in a curable composition. Generally, when compounds present in the reactive components contain carbon-carbon double bonds, such polymerization (curing) involves reaction of such carbon-carbon double bonds.

The term "free radical photoinitiator" refers to a compound that undergoes a photoreaction on absorption of light, producing reactive free radical species. The reactive species that are generated then initiate curing (polymerization) of the reactive components of the curable composition.

The term "free radical polymerizable resin" refers to a resin capable of polymerizing when exposed to free radicals.

The term "(meth)acrylate group" refers to an acrylate group or a methacrylate group. An acrylate group corresponds to a group of the formula -O-C(=O)-CH=CH₂. A methacrylate group corresponds to a group of the formula -O-C(=O)-C(CH₃)=CH₂.

The term "monofunctional" refers to a compound having a single functional group. For example, a monofunctional (meth)acrylate monomer is a monomer having a single (meth)acrylate group.

The term "monomer" refers to a molecule with one or more polymerizable functional groups. The monomer has a single molecular weight, typically below 1000 g/mol, preferably 100 to 950 g/mol. As is generally recognized in the field, commercial products of a particular monomer may contain impurities or other chemical species.

The term "number-average molecular weight" or "Mₙ" refers to the statistical average molecular weight of the polymer chains in a sample or grouping. Number-average molecular weights reported herein are determined using a size exclusion chromatography (SEC) unless expressly noted otherwise.

The term "oligomer" refers to molecules with a distribution of molecular weights and may or may not have one or more polymerizable functional groups. An oligomer may be the reaction product of two or more monomers and typically has a number averaged molecular weight greater than or equal to 500 g/mol, preferably 500 g/mol to 30,000 g/mol, more preferably 1,000 g/mol to 8,000 g/mol. An oligomer may not always have a single molecular weight.

The term "optionally substituted group" means that one or more hydrogen atoms of the group may independently be replaced by a substituent selected from alkyl, cycloalkyl, aryl, heteroaryl, alkoxy, alkylaryl, haloalkyl, hydroxy, halogen, isocyanate, nitrile, amine, oxo (=O), carboxylic acid, -C(=O)-R', -C(=O)-OR', -C(=O)NH-R', -NH-C(=O)R', -O-C(=O)-NH-R', -NH-C(=O)-O-R', -C(=O)-O-C(=O)-R' and -SO₂-NH-R', each R' being independently an optionally substituted group selected from alkyl, aryl, and alkylaryl.

The term "wt%" means weight percentage. Unless otherwise mentioned, the weight percentages of a compound or component of a composition are expressed relative to the weight of the composition.

### Monomers

The composition of the invention comprises a monomer of Formula (1) and a monomer of Formula (2): 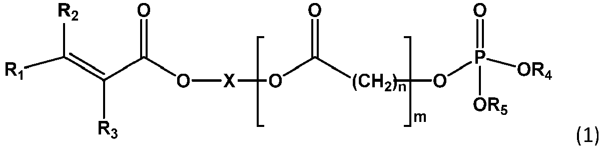 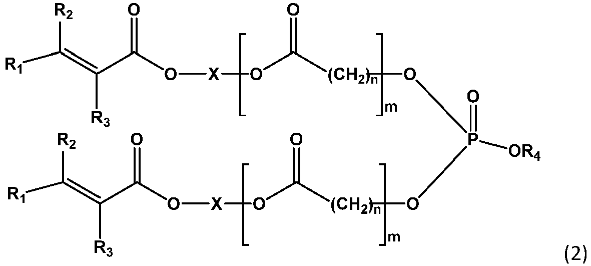 wherein in Formula (1) and Formula (2):
each R₁ is independently H or C₁-C₆ alkyl;
each R₂ is independently H or C₁-C₆ alkyl;
each R₃ is independently H or C₁-C₆ alkyl;
each X is independently C₁-C₆ alkylene, where a N, O or S atom may be inserted between any two carbon atoms present in the alkylene chain and where carbon atoms in the alkylene chain may be substituted with a C₁-C₃ alkyl group;
each R₄ is independently H or a cation;
each R₅ is independently H or a cation;
each n is independently 4 to 7; and
each m is independently 1 to 10

The molar ratio of the monomer of Formula (1) to the monomer of Formula (2) is at least 1.5:1. In an embodiment, the molar ratio of the monoester monomer of Formula (1) to the diester monomer of Formula (2) is at least 1.6:1, such as at least 1.7:1, such as at least 1.8:1, such as at least 1.9:1, such as at least 2.0:1, such as at least 2.2:1, such as at least 2.5:1, such as at least 3.0:1, such as at least 3.5:1, such as at least 4.0:1, such as from 1.5:1 to 4.0:1, such as from 1.5:1 to 3.5:1, such as from 1.5:1 to 3.0:1, such as from 1.5:1 to 2.5:1, such as from 1.5:1 to 2.0:1, such as from 1.5:1 to 1.9:1, such as from 1.5:1 to 1.8:1, such as from 1.5:1 to 1.7:1.

In various embodiments of any of the above-listed molar ratios of the monomer of Formula (1) to the monomer of Formula (2), the variable "m" in each of Formula (1) and Formula (2) may independently be 1 to 9, such as 2 to 9, such as 3 to 9, such as 4 to 9, such as 2 to 8, such as 3 to 8, such as 4 to 8, such as 2 to 7, such as 3 to 7, such as 4 to 7, such as 2 to 6, such as 3 to 6, such as 4 to 6, preferably between 2 and 7, such as between 2 and 6, more preferably between 2 and 5, such as between 2 and 4.

In Formula (1) and Formula (2), each R₄ and R₅ is independently H or a cation. Examples of suitable cations include a metal (e.g., Na⁺, Li⁺, K⁺, Ca²⁺, Ba²⁺, etc.), an ammonium group (NH₄⁺), a primary ammonium group (RNH₃⁺), a secondary ammonium group ((R)₂NH₂⁺), or a tertiary ammonium group ((R)₃NH⁺) where each R is independently a non-hydrogen moiety (e.g., alkyl, heterocyclyl, aryl, heteroaryl, and the like).

In an embodiment, each R₄ and R₅ for the monomers of Formula (1) and Formula (2) is independently selected from an ammonium group (NH₄⁺), a primary ammonium group (RNH₃⁺), a secondary ammonium group (R₂NH₂⁺), a tertiary ammonium group (R₃NH⁺) where each R is independently a non-hydrogen moiety (e.g., alkyl, heterocyclyl, aryl, heteroaryl, and the like), and a metal (e.g., Na⁺, Li⁺, K⁺, Ca²⁺, Ba²⁺, etc.). In an embodiment, at least one of R₄ and R₅ is an ammonium group. In another embodiment, at least one of R₄ and R₅ is a metal. In another embodiment, both R₄ and R₅ are ammonium groups. In another embodiment, both R₄ and R₅ are metals.

In Formula (1) and (2), each R₁ is independently H or C₁-C₆ alkyl. In a preferred embodiment, each R₁ is H or methyl.

In Formula (1) and (2), each R₂ is independently H or C₁-C₆ alkyl. In a preferred embodiment, each R₂ is H or methyl.

In Formula (1) and Formula (2), each R₃ is independently H or C₁-C₆ alkyl. In a preferred embodiment, each R₃ is H or methyl.

In Formula (1) and Formula (2), each X is independently C₁-C₆ alkylene, where a N, O or S atom may be inserted between any two carbon atoms present in the alkylene chain. In a preferred embodiment each X is selected from the following Formula (3) or Formula (4):

-(CR₆R'₆)ₑ- (3)

-[(CR₇R'₇)_{f}-O]_{g}-(CR₇R'₇)ₕ- (4)

wherein:
each R₆ and R'₆ is independently H or C₁-C₃ alkyl;
each R₇ and R'₇ is independently H or methyl;
e is an integer from 1 to 6;
f is an integer from 1 to 4;
g is an integer from 1 to 3;
h is an integer from 1 to 4; and
f + g + h ≤ 6.

In an embodiment of the monomer of Formula (1), n is 5 and m is 1 to 9.

In an embodiment of the monomer of Formula (1), n is 5 and m is 2 to 9.

In an embodiment of the monomer of Formula (1), n is 5 and m is 1 to 8.

In an embodiment of the monomer of Formula (1), n is 5 and m is 2 to 8.

In an embodiment of the monomer of Formula (1), n is 5 and m is 3 to 7.

In an embodiment of the monomer of Formula (1), n is 5 and m is 4 to 6.

In an embodiment of the monomer of Formula (2), each n is 5 and each m is the same and is 1 to 9.

In an embodiment of the monomer of Formula (2), each n is 5 and each m is the same and is 2 to 9.

In an embodiment of the monomer of Formula (2), each n is 5 and each m is the same and is 1 to 8.

In an embodiment of the monomer of Formula (2), each n is 5 and each m is the same and is 2 to 8.

In an embodiment of the monomer of Formula (2), each n is 5 and each m is the same and is 3 to 7.

In an embodiment of the monomer of Formula (2), each n is 5 and each m is the same and is 4 to 6.

In an embodiment of the monomer of Formula (1), n is 5, m is 1 to 8 and X is -CH₂-CH₂-.

In an embodiment of the monomer of Formula (1), n is 5, m is 3 to 5 and X is -CH₂-CH₂-.

In an embodiment of the monomer of Formula (1), n is 5, m is 4 to 6 and X is -CH₂-CH₂-.

In an embodiment of the monomer of Formula (2), each n is 5, each m is the same and is m is 1 to 8 and X is -CH₂-CH₂-.

In an embodiment of the monomer of Formula (2), each n is 5, each m is the same and is 3 to 7 and each X is -CH₂-CH₂-.

In an embodiment of the monomer of Formula (2), each n is 5, each m is the same and is 4 to 6 and each X is -CH₂-CH₂-.

In an embodiment of the monomer of Formula (1), n is 5, m is 4 and X is -CH₂-CH₂-.

In an embodiment of the monomer of Formula (2), each n is 5, each m is 4 and each X is -CH₂-CH₂-.

In an embodiment of the invention, the two (meth)acrylate substituents of Formula (2) are identical to each other.

In an embodiment of the invention, the (meth)acrylate substituent of Formula (1) and the two (meth)acrylate substituents of Formula (2) are identical.

In an embodiment, the combined amount of the monomers of Formula (1) and Formula (2) is from 0.05 to 10 wt%, such as from 0.1 to 10 wt%, such as from 0.5 to 10 wt%, such as from 1 to 10 wt%, such as from 2 to 10 wt%, such as from 4 to 10 wt%, such as from 5 to 10 wt%, relative to the total weight of the polymerizable monomers present in the composition.

In an embodiment, the combined amount of the monomers of Formula (1) and Formula (2) is from 10 to 100 wt%, such as from 10 to 90 wt%, such as from 10 to 80 wt%, such as from 10 to 70 wt%, such as from 10 to 60 wt%, such as from 10 to 50 wt%, such as from 10 to 40 wt%, such as from 10 to 30 wt%, such as from 10 to 90 wt%, such as from 20 to 100 wt%, such as from 20 to 90 wt%, such as from 20 to 80 wt%, such as from 20 to 70 wt%, such as from 20 to 60 wt%, such as from 20 to 50 wt%, such as from 20 to 40 wt%, such as from 30 to 100 wt%, such as from 30 to 90 wt%, such as from 30 to 80 wt%, such as from 30 to 70 wt%, such as from 30 to 60 wt%, such as from 40 to 100 wt%, such as from 40 to 90 wt%, such as from 40 to 80 wt%, such as from 50 to 100 wt%, relative to the total weight of the polymerizable monomers present in the composition.

The composition may comprise 0.05 to 95%, in particular 0.5 to 90%, more particularly 1 to 85%, even more particularly 2 to 80%, more particularly still 5 to 70% by weight of monomer of formula (1) and (2) based on the total weight of the composition. In particular, the composition may comprise 2 to 50% or 2 to 40% or 2 to 30% or 2 to 20%, by weight of monomer of formula (1) and (2) based on the total weight of the composition.

Other than the required presence of a monomer of Formula (1) and Formula (2), other monomers which may be present in the curable composition are not particularly limited and may include one, two, three, or four or more ethylenically unsaturated compounds containing at least one polymerizable carbon-carbon double bond, i.e. a carbon-carbon double bond capable of participating in a free radical polymerization reaction or anionic polymerization reaction, such as a reaction initiated by persulfates, peroxides, azo-containing compounds or other conventional radical initiators.

The curable composition may thus further comprise at least one ethylenically unsaturated monomer, preferably at least two ethylenically unsaturated monomers, that are not monomers of Formula (1) or (2).

In an embodiment, the amount of ethylenically unsaturated monomers that are also present in the curable composition (other than the monomer of Formula (1) and the monomer of Formula (2)) ranges from 1 to 99 wt%, such as from 1 to 95 wt%, such as from 1 to 90 wt%, such as 1 to 80 wt%, such as from 1 to 75 wt%, such as from 1 to 65 wt%, such as from 1 to 55 wt%, such as from 1 to 45 wt%, such as from 1 to 35 wt%, such as from 1 to 25 wt%, such as from 1 to 15 wt%, such as from 5 to 99 wt%, such as from 5 to 95 wt%, such as from 5 to 90 wt%, such as from 5 to 80 wt%, such as from 5 to 75 wt%, such as from 5 to 65 wt%, such as from 5 to 55 wt%, such as from 5 to 45 wt%, such as from 5 to 35 wt%, such as from 5 to 25 wt%, such as from 5 to 15 wt%, such as from 10 to 99 wt%, such as from 10 to 95 wt%, such as from 10 to 90 wt%, such as from 10 to 80 wt%, such as from 10 to 75 wt%, such as from 10 to 65 wt%, such as from 10 to 55 wt%, such as from 10 to 45 wt%, such as from 10 to 35 wt%, such as from 10 to 25 wt%, such as from 15 to 99 wt%, such as from 15 to 95 wt%, such as from 15 to 90 wt%, such as from 15 to 80 wt%, such as from 15 to 75 wt%, such as from 15 to 65 wt%, such as from 15 to 55 wt%, such as from 15 to 45 wt%, such as from 15 to 35 wt%, such as from 20 to 99 wt%, such as from 20 to 95 wt%, such as from 20 to 90 wt%, such as from 20 to 80 wt%, such as from 20 to 75 wt%, such as from 20 to 65 wt%, such as from 20 to 55 wt%, such as from 30 to 99 wt%, such as from 30 to 95 wt%, such as from 30 to 90 wt%, such as from 30 to 80 wt%, such as from 30 to 75 wt%, such as from 30 to 65 wt% relative to the total weight of the polymerizable monomers present in the composition.

In particular, the composition may comprise a (meth)acrylate-functionalized monomer or a mixture of (meth)acrylate-functionalized monomers other than the monomers of formula (1) and (2) (hereinafter referred to as the other (meth)acrylate-functionalized monomer).

The other (meth)acrylate-functionalized monomer may have 1 to 6 (meth)acrylate groups, in particular 1 to 3 (meth)acrylate groups.

The other (meth)acrylate-functionalized monomer may comprise a mixture of (meth)acrylate-functionalized monomers having different functionalities. For example the other (meth)acrylate-functionalized monomer may comprise a mixture of a (meth)acrylate-functionalized monomer containing a single acrylate or methacrylate group per molecule (referred to herein as "mono(meth)acrylate-functionalized compounds") and a (meth)acrylate-functionalized monomer containing 2 or more, preferably 2 or 3, acrylate and/or methacrylate groups per molecule.

In one embodiment, the other (meth)acrylate functionalized monomer comprises a mono(meth)acrylate-functionalized monomer. The mono(meth)acrylate-functionalized monomer may advantageously function as a reactive diluent and reduce the viscosity of the composition.

Examples of suitable other mono(meth)acrylate-functionalized monomers include, but are not limited to, mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and the like.

The following compounds are specific examples of mono(meth)acrylate-functionalized monomers suitable for use in component a): methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof.

In one embodiment, the other (meth)acrylate functionalized monomer may comprise a (meth)acrylate-functionalized monomer containing two or more (meth)acrylate groups per molecule.

Examples of suitable (meth)acrylate-functionalized monomers containing two or more (meth)acrylate groups per molecule include acrylate and methacrylate esters of polyols. Such polyols may be fully or partially esterified (with (meth)acrylic acid, (meth)acrylic anhydride, (meth)acryloyl chloride or the like), provided they contain at least two (meth)acrylate functional groups per molecule.

Exemplary (meth)acrylate-functionalized monomers containing two or more (meth)acryloyloxy groups per molecule may include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; metallic di(meth)acrylates; modified metallic di(meth)acrylates; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; as well as the alkoxylated (e.g., ethoxylated and/or propoxylated) derivatives thereof; and combinations thereof.

Preferred monomers present in the curable compositions described herein (other than the monomers of Formula (1) and Formula (2)) include 1,2-dodecanediol dimethacrylate (DDDMA), isobornyl acrylate (IBOA), caprolactone acrylate (CAPA), tricyclodecanedimethanol diacrylate (TCDDMA) and mixtures thereof. Such monomers were observed to enhance the electric and/or mechanical properties of batteries coated with the composition of the invention.

The composition may comprise 0 to 95%, in particular 5 to 90%, more particularly 10 to 85%, even more particularly 15 to 80%, more particularly still 20 to 70% by weight of other (meth)acrylate-functionalized monomers based on the total weight of the composition. In particular, the composition may comprise 5 to 50% or 10 to 50% or 15 to 50% or 20 to 50% or 25 to 50%, by weight of other (meth)acrylate-functionalized monomer based on the total weight of the composition.

The composition may comprise one or more ethylenically unsaturated compounds other than a (meth)acrylate-functionalized monomer or oligomer. Examples of such ethylenically unsaturated compounds include:
- polyvinylic and/or polyallylic monomers (in particular divinyl benzene, 1,4-butanediol divinyl ether, tri(ethylene glycol) divinyl ether, diallyl ether, glycerol diallyl ether, glycerol triallyl ether, trimethylolpropane diallyl ether, trimethylolpropane triallyl ether, pentaerythritol triallyl ether, pentaerythritol tetraallyl ether, diallyl phthalate, triallyl isocyanurate, 2,4,6-triallyloxy-1,3,5-triazine, glyoxal bis(diallyl acetal) and mixtures thereof);
- vinyl esters of carboxylic acids (in particular vinyl acetate, vinyl propionate, vinyl hexanoate, vinyl 2-ethylhexanoate, vinyl octanoate, vinyl pelargonate, vinyl laurate, vinyl stearate, a vinyl ester of versatic acid and mixtures thereof);
- vinyl ethers (in particular vinyl methyl ether, vinyl ethyl ether, vinyl n-butyl ether, vinyl isobutyl ether and mixtures thereof, ethylene glycol divinyl ether, triethylene glycol divinyl ether and trimethylolpropane trivinyl ether);
- cycloaliphatic vinyl monomers (in particular vinylcyclohexane);
- olefins (in particular ethylene, propene, 1-butene, isobutylene, diisobutylene, 1-nonene, 1-decene and mixtures thereof);
- conjugated dienes (in particular butadiene, isoprene, pentadiene, chlorodiene and mixtures thereof);
- vinyl aromatic monomers (in particular styrene, alpha-methylstyrene, tert-butylstyrene, ortho-, meta-, and para-methylstyrene, ortho-, meta- and para-ethylstyrene, o-methyl-p-isopropylstyrene, p-chlorostyrene, p-bromostyrene, o,p-dichlorostyrene, o,p-dibromostyrene, ortho-, meta- and para-methoxystyrene, optionally substituted indenes, optionally substituted vinylnaphthalenes, acenaphthylene, diphenylethylene, vinyl anthracene and mixtures thereof);
- mono- or dicarboxylic acid monomers, cyclic anhydride monomers and salts thereof (in particular 3-butenoic acid, crotonic acid, vinyl acetic acid, fumaric acid, maleic acid, maleic anhydride, tetrahydrophthalic acid, tetrahydrophthalic anhydride, itaconic acid, mesaconic acid, citraconic acid, glutaconic acid, muconic acid and mixtures thereof);
- as well as the alkoxylated (e.g., ethoxylated and/or propoxylated) derivatives thereof;
- and mixtures thereof.

### Oligomers

The composition of the invention may further comprise a (meth)acrylate functionalized oligomer or a mixture of (meth)acrylate functionalized oligomers.

Suitable (meth)acrylate-functionalized oligomers include, for example, polyester (meth)acrylates, polyether (meth)acrylates, epoxy (meth)acrylates, urethane (meth)acrylates (also referred to as polyurethane (meth)acrylates or urethane (meth)acrylate oligomers) and combinations thereof, as well as amine-modified and sulfide-modified variations thereof.

Examples of suitable epoxy (meth)acrylate oligomers include the reaction products of acrylic or methacrylic acid or mixtures thereof with glycidyl ethers or esters. For example, the glycidyl ether may be a polyglycidyl ether of a bisphenol such as bisphenol A or oligomer thereof.

Suitable polyether (meth)acrylate oligomers include, but are not limited to, the condensation reaction products of acrylic or methacrylic acid or mixtures thereof with polyetherols which are polyether polyols (such as polyethylene glycol, polypropylene glycol or polytetramethylene glycol). Suitable polyetherols can be linear or branched compounds containing ether bonds and terminal hydroxyl groups. Polyetherols can be prepared by ring opening polymerization of cyclic ethers such as tetrahydrofuran or alkylene oxides with a starter molecule. Suitable starter molecules include, but are not limited to, water, polyhydroxyl functional compounds, polyester polyols and amines.

Suitable polyurethane (meth)acrylate oligomers may be prepared by reacting aliphatic and/or aromatic diisocyanates with OH-group terminated polyester polyols (including aromatic, aliphatic and mixed aliphatic/aromatic polyester polyols), polyether polyols, polycarbonate polyols, polycaprolactone polyols, polyorganosiloxane polyols (e.g., polydimethylsiloxane polyols), or polydiene polyols (e.g., polybutadiene polyols), or combinations thereof to form isocyanate-functionalized oligomers which are then reacted with hydroxyl-functionalized (meth)acrylates such as hydroxyethyl acrylate or hydroxyethyl methacrylate to provide terminal (meth)acrylate groups. For example, the polyurethane (meth)acrylate oligomers may contain two, three, four or more (meth)acrylate functional groups per molecule.

In a preferred embodiment, the composition comprises one or more oligomers selected from epoxy (meth)acrylates, polyester (meth)acrylates, polyester-based aliphatic urethane di(meth)acrylates, polyether-based aliphatic urethane di(meth)acrylates and polybutadiene-based aliphatic urethane di(meth)acrylates. Such oligomers were observed to enhance the electric and/or mechanical properties of batteries coated with the composition of the invention.

The curable composition of the invention may comprise 0 to 95 %, in particular 5 to 90 %, more particularly 10 to 85 %, even more particularly 15 to 80 %, by weight of (meth)acrylate-functionalized oligomer based on the total weight of the curable composition. In particular, the curable composition of the invention may comprise 5 to 60 % or 10 to 60 % or 15 to 60 % or 20 to 60 %, by weight of (meth)acrylate-functionalized oligomer based on the total weight of the curable composition.

### Free Radical Photoinitiator

The curable composition may comprise at least one free radical photoinitiator. The free radical photoinitiator is operable to cure the free radical polymerizable resin. Generally, free radical photoinitiators can adopt two different modes of action and are classified by mode of action as Norrish Type I and Norrish Type II photo-initiators. In some embodiments, the free radical photoinitiator comprises a Norrish Type I photo-initiator, a Norrish Type II photo-initiator, or both.

As used herein, the term "activity" with reference to Norrish Type I and Norrish Type II activity is intended to relate to Norrish photoinitiation and analogous reactions. For instance, a photoinitiator having Norrish Type I activity would be a photoinitiator characterized by a cleavage reaction into radical fragments of the original photoinitiator on exposure to actinic radiation within a selected wavelength range. For an initiator having Norrish Type II activity, exposure to actinic radiation within a selected wavelength range causes the formation of a radical species which can abstract a hydrogen to create a second radical species which can initiate a photo polymerization. The Norrish Type I and Norrish Type II mechanisms are known to the person of ordinary skill in the art.

Classes of suitable free radical photoinitiators suitable for use in the curable compositions as described herein include, but are not limited to, benzoins, benzoin ethers, acetophenones, α-hydroxy acetophenones, benzyl ketals, anthraquinones, phosphine oxides, acylphosphine oxides, α-hydroxyketones, phenylglyoxylates, α-aminoketones, benzophenones, thioxanthones, xanthones, acridine derivatives, phenazene derivatives, quinoxaline derivatives, triazines, benzoyl formates, aromatic oximes, metallocenes, acylsilyl or acylgermanyl compounds, camphorquinones, polymeric derivatives thereof, and mixtures thereof.

Examples of suitable free radical photoinitiators include, but are not limited to, 2-methylanthraquinone, 2-ethylanthraquinone, 2-chloroanthraquinone, 2-benzyanthraquinone, 2-tert-butylanthraquinone, 1,2-benzo-9,10-anthraquinone, benzoin methyl ether, benzoin ethyl ether, benzoin isopropyl ether, alpha-methylbenzoin, alpha-phenylbenzoin, Michler's ketone, 2,2-dialkoxybenzophenones, 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, α-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric α-hydroxy ketones, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, (benzene) tricarbonylchromium, benzil, benzoin isobutyl ether, benzophenone/1-hydroxycyclohexyl phenyl ketone (50/50 blend), 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

Preferred free radical photoinitiators include a benzophenone (such as those available from Sartomer under the trademarks Speedcure^{™} BP, Speedcure^{™} 7005, and Speedcure^{™} 7006), a thioxanthone (such as available from Sartomer under the trademarks Speedcure^{™} 7010 and Speedcure^{™} ITX), an α-hydroxy acetophenone, an acylphosphine oxide (such as available from Sartomer under the trademarks Speedcure^{™} BPO, Speedcure^{™} TPO and Speedcure^{™} TPO-L) and combinations thereof.

In an exemplary embodiment, the free radical photoinitiator is an acylphosphine oxide. As used herein, the term "phosphine oxide" refers to a compound comprising a -P(=O)- group. The acylphosphine oxide may have Structure 1

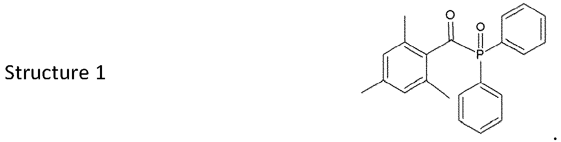

In an exemplary embodiment, the free radical photoinitiator is a phenylpropanone, such as a phenylpropanone with Structure 2

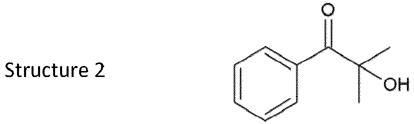

In an exemplary embodiment, the free radical photoinitiator is a blend of an acylphosphine oxide and a phenylpropanone.

### Additives

The curable composition of the present invention may further comprise an additive. The curable composition may comprise a mixture of additives.

In particular, the additive may be selected from antioxidants, ultraviolet absorbers, stabilizers, defoamers, solvents, coalescing agents, rheology modifiers, flow or leveling agents, colorants, adhesion promoters, pigments, dispersants, wetting agents, slip additives, fillers, thixotropic agents, matting agents, waxes, neutralizers, biocides, preservatives, organic solvents or other various additives, including any of the additives conventionally utilized in the coating, sealant or adhesive arts.

In various embodiments, the curable composition may comprise from 0 wt% to 40 wt%, based on the total weight of the curable composition, of one or more of these additives, such as from 0.01 wt% to 30 wt%, such as from 0.01 wt% to 25 wt%, such as from 0.01 wt% to 20 wt%, such as from 0.01 wt% to 15 wt%, such as from 0.1 wt% to 40 wt%, such as from 0.1 wt% to 30 wt%, such as from 0.1 wt% to 25 wt%, such as from 0.1 wt% to 20 wt%, such as from 0.5 wt% to 15 wt%, such as from 0.5 wt% to 10 wt%, such as from 0.5 wt% to 5 wt%, such as from 0.5 wt% to 1 wt%.

Suitable pigments include zinc oxide, antimony oxide, zirconium oxide, chromium oxide, iron oxide, lead oxide, zinc sulfide, lithopone, and forms of titanium dioxide such as anatase and rutile.

Suitable fillers include alkaline earth metal carbonates such as calcium carbonate, clay minerals, aluminosilicates such as kaolin, andalusite, kyanite, and sillimanite, alkaline earth metal sulfate such as calcium sulfate and barium sulfate, talc, aluminum stearate, diatomaceous earth, wollastonite, nephelene syenite, alumina, silica, and silicon oxide, or combinations thereof.

Suitable wetting agents include alkoxylated surfactants, silicone surfactants, sulfosuccinates and fluorinated polymers.

Suitable ultraviolet absorbers include benzophenones (such as benzophenone and hydroxybenzophenone), benzotriazoles (such as hydroxyphenyl benzotriazole), hydroxyphenyl triazines (such as oxanilide) and thioxanthone.

### Solvents

The curable composition of the invention may comprise a solvent. As used herein, the term "solvent" means a non-reactive organic solvent, i.e. a solvent comprising carbon and hydrogen atom that does not react when exposed to the actinic radiation used to cure the curable compositions described herein.

In an embodiment, the curable compositions comprise an organic solvent. In another embodiment, the curable compositions contain no or substantially no organic solvent. Suitable organic solvents include, but are not limited to, aliphatic hydrocarbons such n-pentane, n-hexane, n-heptane, octane cyclohexane or methylcyclohexane; aromatic hydrocarbons such as benzene toluene or xylene; halogenated hydrocarbons such as dichloromethane, chloroform or trichlororethane; ketones such as acetone, methyl ethyl ketone, methyl propyl ketone, diethylketone, methylisobutylketone, ethyl butyl ketone, cyclopentanone or cyclohexanone; esters such as methyl formate, butyl formate, methyl acetate, ethyl acetate, propyl acetate or butyl acetate; ethers such as diethyl ether, diisopropyl ether, dibutyl ether, ethylene glycol diethyl ether, tetrahydrofuran or tetrahydropyrane; carbonates such as diethyl carbonate; and combinations thereof. When a solvent is present, the total amount may, in an embodiment, be from 5 to 150% by weight based on the total weight of the polymerizable components.

Advantageously, the curable composition of the present invention may be formulated to be solvent-free. For example, the curable composition of the present invention may contain little or no solvent, e.g., less than 10 %, or less than 5 %, or less than 1 %, or even 0 % by weight of solvent, based on the total weight of the curable composition.

### Water

In an embodiment, the curable composition is substantially free of water (i.e, contains less than 5 wt% relative to the total weight of the curable composition), such as less than 3 wt%, such as less than 1 wt%, such as less than 0.5 wt%, such as less than 0.2 wt%, such as less than 0.1 wt%, such as less than 0.01 wt%, such as 0 to 4 wt%, such as 0 to 1 wt%, such as 0 to 0.5 wt%, such as 0 to 0.1 wt%, such as 0 wt%, of water, relative to the total weight of the curable composition.

### Preferred embodiments and formulations

An embodiment is a curable composition (suitable for use in batteries) comprising the monomers of Formula (1) and Formula (2) and one or more of 1,2-dodecanediol dimethacrylate (DDDMA), isobornyl acrylate (IBOA), and caprolactone acrylate (CAPA), wherein a molar ratio of the monomer of Formula (1) to the monomer of Formula (2) is at least 1.5:1, and wherein the curable composition is substantially free of water.

Another embodiment is a curable composition (suitable for use in batteries) comprising the monomers of Formula (1) and Formula (2) and one or more oligomers comprising polyester acrylates, polyester-based aliphatic urethane diacrylates, polyether-based aliphatic urethane diacrylates and polybutadiene-based aliphatic urethane diacrylates, wherein a molar ratio of the monomer of Formula (1) to the monomer of Formula (2) is at least 1.5:1, and wherein the curable composition is substantially free of water.

Another embodiment is a curable composition (suitable for use in batteries) comprising the monomers of Formula (1) and Formula (2); one or more of 1,2-dodecanediol dimethacrylate (DDDMA), isobornyl acrylate (IBOA) and caprolactone acrylate (CAPA); and one or more oligomers comprising polyester acrylates, polyester-based aliphatic urethane diacrylates, polyether-based aliphatic urethane diacrylates and polybutadiene-based aliphatic urethane diacrylates, wherein a molar ratio of the monomer of Formula (1) to the monomer of Formula (2) is at least 1.5:1, and wherein the curable composition is substantially free of water.

Another embodiment is a curable composition (suitable for use in batteries) comprising the phosphate monomers of Formula (1) and Formula (2), one or more acrylate oligomers, one or more acrylate monomers other than the monomers of Formula (1) and Formula (2), a photoinitiator and one or more fillers/additives, wherein a molar ratio of the monomer of Formula (1) to the monomer of Formula (2) is at least 1.5:1, and wherein the curable composition is substantially free of water.

Another embodiment is a curable composition (suitable for use in batteries) comprising 1-5 wt% of the combined amount of the monomers of Formula (1) and Formula (2), 20-60 wt% of an acrylate oligomer, 25-50 wt% of an acrylate monomer other than the monomers of Formula (1) and Formula (2), and 0.5-3 wt% of a photoinitiator, based on the total weight of the curable composition, wherein a molar ratio of the monomer of Formula (1) to the monomer of Formula (2) is at least 1.5:1, wherein the curable composition is substantially free of water, and where the composition is organic solvent-free or alternatively, contains one or more organic solvents.

Another embodiment is a curable composition (suitable for use in batteries) where n is 5, X is CH₂-CH₂, and m is 2 to 9, such as 2 to 8, such as 2 to 7, such as 2 to 6, such as 3 to 9, such as 3 to 8, such as 3 to 7, such as 4 to 9, such as 4 to 8, such as 4 to 7.

The curable compositions described herein may be compositions that are to be subjected to curing by means of free radical polymerization. In particular embodiments, the curable compositions may be photocured (i.e., cured by exposure to actinic radiation, in particular UV, near-UV, visible, infrared and/or near-infrared radiation).

The curable composition of the invention may be an ink composition, a coating composition, an adhesive composition, a sealant composition, a molding composition, a dental composition, a nail polish composition or a 3D-printing composition.

End use applications for the curable compositions include, but are not limited to, inks, coatings, adhesives, additive manufacturing resins (such as 3D printing resins), molding resins, sealants, composites, antistatic layers, electronic applications, recyclable materials, smart materials capable of detecting and responding to stimuli, packaging materials, personal care articles, nail polishes, articles for use in agriculture, water or food processing, or animal husbandry, and biomedical materials. The curable compositions of the invention thus find utility in the production of biocompatible articles. Such articles may, for example, exhibit high biocompatibility, low cytotoxicity and/or low extractables.

The composition according to the invention may in particular be used to obtain a cured product according to the following processes.

### Process for the preparation of a cured composition

An aspect of the invention relates to a process for the preparation of a cured composition, comprising curing the curable composition of the invention, preferably by exposing the curable composition to actinic radiation such as UV, near-UV, visible, infrared and/or near-infrared radiation, more particularly by exposing the polymerizable composition to a LED light source. The curable composition may also be cured by exposing the actinically-curable composition to actinic radiation and heat by any of a number of well-known conventional techniques.

Curing may be accelerated or facilitated by supplying energy to the curable composition, such as by heating the curable composition. Thus, the cured composition may be deemed as the reaction product of the curable composition, formed by curing. A curable composition may be partially cured by exposure to actinic radiation, with further curing being achieved by heating the partially cured article. For example, a product formed from the curable composition may be heated at a temperature of from 40°C to 120°C for a period of time from 5 minutes to 12 hours.

Prior to curing, the curable composition may be applied to a substrate surface in any known conventional manner, for example, by spraying, jetting, knife coating, roller coating, casting, drum coating, dipping, and the like and combinations thereof. Indirect application using a transfer process may also be used.

The substrate on which the curable composition is applied and cured may be any kind of substrate. Suitable substrates are detailed below. When used as an adhesive, the curable composition may be placed between two substrates and then cured, the cured composition thereby bonding the substrates together to provide an adhered article. Curable compositions in accordance with the present invention may also be formed or cured in a bulk manner (e.g., the curable composition may be cast into a suitable mold and then cured).

The substrate may be a ceramic, metallic, mineral, cellulosic, animal-based or polymeric substrate. The substrate may also be a part of a human body, such as a tooth or a nail.

The substrate may be porous or substantially non-porous. The substrates may be transparent, translucent or opaque.

Examples of ceramic substrates include alumina-based ceramics and zirconia-based ceramics.

Examples of metallic substrates include titanium, gold, silver, copper, brass, steel and bronze.

Examples of mineral substates include glass, asbestos and basalt.

Examples of cellulosic substrates include plain paper or resin coated paper (e.g. polyethylene or polypropylene coated paper). There is no real limitation on the type of paper which includes newsprint paper, magazine paper, office paper, wallpaper but also paper of higher grammage, usually referred to as boards, such as white lined chipboard, corrugated board and packaging board. Further examples of cellulosic substrates include bamboo, cotton, flax, hemp, jute, lyocell, modal, rayon, raffia, ramie and sisal.

Examples of cellulosic substrates include wool, fur, silk and leather.

Examples of polymeric substrates include polyethylene, polypropylene, polycarbonate, polyvinyl chloride, polyethylene terephthalate, polyethylene naphthalate, polylactide, polyamide, polyimide, polyacrylonitrile, polyurethane, acrylonitrile butadiene styrene.

There is no restriction on the shape of the substrate which can be a sheet, a film, a non-woven or woven fiber mat or a three dimensional object.

In particular, the substrate may be selected from a food and beverage packaging, a pharmaceutical packaging, a textile, a medical device, a food and beverage processing equipment, a water pipe, a battery or a toy.

In an embodiment, the curable compositions of the invention as described herein are used as a coating batteries (e.g., a battery for an electric machine or vehicle, such as a dielectric battery) on their exterior surface(s). Coatings on battery cells and modules are essential for various reasons, including providing protection, insulation, and enhancing the overall performance and durability of the battery system. At elevated temperatures and at high relative humidities, strong adhesion and flexibility of battery coatings are critical for several reasons, including, but not limited to: (1) Environmental Protection, where battery cells and modules are often exposed to harsh environmental conditions, such as high humidity and temperature fluctuations and therefore require a protective barrier, shielding the battery from moisture and contaminants, where strong adhesion ensures that the coating remains in place and effectively guards against environmental threats; (2) Corrosion Prevention, which is needed to combat high humidity and elevated temperatures which can accelerate corrosion and chemical reactions on the surface of battery cells and modules, where strong adhesion of the compositions create a barrier that inhibits moisture and contaminants from coming into contact with the battery's metallic (such as aluminum) components, reducing the risk of corrosion; (3) Maintaining Electrical Insulation, where the compositions provide electrical insulation in battery systems, where strong adhesion ensures that the insulation remains intact, preventing electrical leakage or short circuits that could result from the intrusion of moisture or contaminants; (4) Long-Term Durability, where the operational life of the battery is extended by the presence of the compositions. In addition, flexible coatings (which are characteristic of the compositions of the invention) are better equipped to endure the mechanical stresses and temperature variations experienced by batteries throughout their lifespans.

In an embodiment, the curable compositions are used for coating an exterior surface of a battery. In other embodiments, the curable compositions are used for coating a battery electrode or the battery separator of a lithium-ion battery. The curable compositions combine desirable performance properties that include ease of application, improved storage stability, flow, adhesion, electric insulation, matting, flame retardancy and weathering resistance (which includes one or more of high and low temperature compatibility, salt fog resistance and humidity resistance). The curable compositions notably provide high dielectric strength and high resistivity, which are desirable for application on the outside (exterior) surface of a battery, which surface in an embodiment is metal, such as aluminum.

Standard tests performed on a battery coated with the cured version of the curable compositions described herein include ASTM D257 (surface/volume resistivity) which measures the resistance to leakage current through the body of an insulating material; and ASTM D149 which evaluates both the failure of an insulating material under an externally applied field (dielectric breakdown) and the ability of an insulating material or device to withstand a high voltage without experiencing a disruptive electrical breakdown (dielectric withstand).

### Aspects of the Invention

The invention also relates to the following Aspects.

Aspect 1. A curable composition comprising, consisting essentially of, or consisting of, a monoester monomer of Formula (1) and a diester monomer of Formula (2), 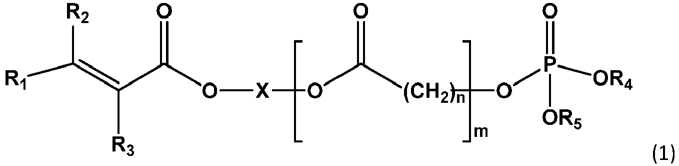 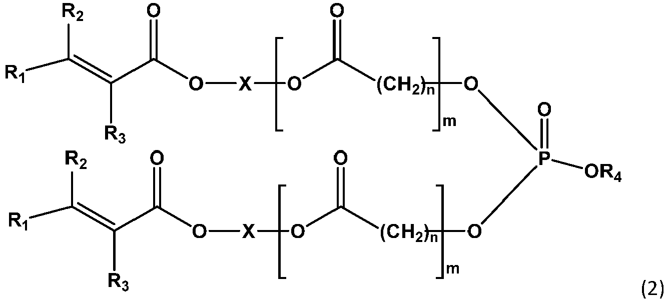 wherein a molar ratio of the monomer of Formula (1) to the monomer of Formula (2) is at least 1.5:1, and wherein the curable composition is substantially free of water; wherein in Formula (1) and Formula (2):
each R₁ is independently H or C₁-C₆ alkyl;
each R₂ is independently H or C₁-C₆ alkyl;
each R₃ is independently H or C₁-C₆ alkyl;
each X is independently C₁-C₆ alkylene, where a N, O or S atom may be inserted between any two carbon atoms present in the alkylene chain and where carbon atoms in the alkylene chain may be substituted with a C₁-C₃ alkyl group;
each R₄ is independently H or a cation;
each R₅ is independently H or a cation;
each n is independently 4 to 7; and
each m is independently 1 to 10,

Aspect 2. The curable composition of Aspect 1, wherein the molar ratio of the monomer of Formula (1) to the monomer of Formula (2) is at least 1.6:1, such as at least 1.7:1, such as at least 1.8:1, such as at least 1.9:1, such as at least 2.0:1, such as at least 2.2:1, such as at least 2.5:1, such as at least 3.0:1, such as at least 3.5:1, such as at least 4.0:1, such as from 1.5:1 to 4.0:1, such as from 1.5:1 to 3.5:1, such as from 1.5:1 to 3.0:1, such as from 1.5:1 to 2.5:1, such as from 1.5:1 to 2.0:1, such as from 1.5:1 to 1.9:1, such as from 1.5:1 to 1.8:1, such as from 1.5:1 to 1.7:1.

Aspect 3. The curable composition of Aspect 1 or Aspect 2, wherein X is selected from -CH₂-CH₂-, Formula (3) or Formula (4):

-(CR₆R'₆)ₑ- (3)

-[(CR₇R'₇)_{f}-O]_{g}-(CR₇R'₇)ₕ- (4)

wherein:
each R₆ and R'₆ is independently H or C₁-C₃ alkyl;
each R₇ and R'₇ is independently H or methyl;
e is an integer from 1 to 6;
f is an integer from 1 to 4;
g is an integer from 1 to 3;
h is an integer from 1 to 4; and
f + g + h ≤ 6.

Aspect 4. The curable composition of any of Aspects 1 to 3, wherein for the monomer of Formula (1) and the monomer of Formula (2), m is 1 to 9, such as 2 to 9, such as 3 to 9, such as 4 to 9, such as 2 to 8, such as 3 to 8, such as 4 to 8, such as 2 to 7, such as 3 to 7, such as 4 to 7, such as 2 to 6, such as 3 to 6, such as 4 to 6.

Aspect 5. The curable composition of any of Aspects 1 to 4, wherein for the monomer of Formula (1) and the monomer of Formula (2), n is 5.

Aspect 6. The curable composition of any of Aspects 1 to 5, wherein for the monomer of Formula (1) and the monomer of Formula (2), m is 3 to 7 and n is 5.

Aspect 7. The curable composition of any of Aspects 1 to 6, wherein for the monomer of Formula (1) and the monomer of Formula (2), m is 3 to 7, n is 5 and X is -CH₂-CH₂-.

Aspect 8. The curable composition of any of Aspects 1 to 7, wherein for the monomer of Formula (1) and the monomer of Formula (2), m is 4 to 6.

Aspect 9. The curable composition of any of Aspects 1 to 8, wherein for the monomer of Formula (1) and the monomer of Formula (2), m is 4.

Aspect 10. The curable composition of any of Aspects 1 to 8, wherein for the monomer of Formula (1) and the monomer of Formula (2), m is 4 and n is 5.

Aspect 11. The curable composition of any of Aspects 1 to 8, wherein for the monomer of Formula (1) and the monomer of Formula (2), m is 5 and n is 5.

Aspect 12. The curable composition of any of Aspects 1 to 8, wherein for the monomer of Formula (1) and the monomer of Formula (2), m is 4, n is 5 and X is -CH₂-CH₂-.

Aspect 13. The curable composition of any of Aspects 1 to 8, wherein for the monomer of Formula (1) and the monomer of Formula (2), m is 5, n is 5 and X is -CH₂-CH₂-.

Aspect 14. The curable composition of any of Aspects 1 to 13, wherein for the monomer of Formula (1) and the monomer of Formula (2), R₄ is an ammonium ion.

Aspect 15. The curable composition of any of Aspects 1 to 13, wherein for the monomer of Formula (1) and the monomer of Formula (2), R₄ is H.

Aspect 16. The curable composition of any of Aspects 1 to 13, wherein for the monomer of Formula (1) and the monomer of Formula (2), R₄ is Na⁺, Li⁺, K⁺, Ca²⁺ or Ba²⁺.

Aspect 17. The curable composition of any of Aspects 1 to 16, wherein for the monomer of Formula (1), R₅ is an ammonium ion.

Aspect 18. The curable composition of any of Aspects 1 to 16, wherein for the monomer of Formula (1), R₅ is H.

Aspect 19. The curable composition of any of Aspects 1 to 16, wherein for the monomer of Formula (1), R₅ is Na⁺, Li⁺, K⁺, Ca²⁺ or Ba²⁺.

Aspect 20. The curable composition of any of Aspects 1 to 19, further comprising one or more ethylenically unsaturated monomers selected from methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof..

Aspect 21. The curable composition of any of Aspects 1 to 19, further comprising one or more ethylenically unsaturated monomers selected bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; metallic di(meth)acrylates; modified metallic di(meth)acrylates; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; as well as the alkoxylated (e.g., ethoxylated and/or propoxylated) derivatives thereof; and combinations thereof..

Aspect 22. The curable composition of any of Aspects 1 to 19, further comprising one or more ethylenically unsaturated monomers selected from 1,2-dodecanediol dimethacrylate (DDDMA), isobornyl acrylate (IBOA), caprolactone acrylate (CAPA), tricyclodecanedimethanol diacrylate (TCDDMA) and mixtures thereof.

Aspect 23. The curable composition of any of Aspects 1 to 22, further comprising one or more oligomers selected from polyester (meth)acrylates, polyester-based aliphatic urethane di(meth)acrylates, polyether-based aliphatic urethane di(meth)acrylates and polybutadiene-based aliphatic urethane di(meth)acrylates and combinations thereof.

Aspect 24. The curable composition of any of Aspects 1 to 23, wherein the curable composition contains one or more additives selected antioxidants, ultraviolet absorbers, stabilizers, defoamers, solvents, coalescing agents, rheology modifiers, flow or leveling agents, colorants, adhesion promoters, pigments, dispersants, wetting agents, slip additives, fillers, thixotropic agents, matting agents, waxes, neutralizers, biocides, preservatives, organic solvents, and combinations thereof.

Aspect 25. The curable composition of any of Aspects 1 to 24, wherein the combined amount of the monomers of Formula (1) and Formula (2) is from 0.05 to 95%, 0.5 to 90%, 1 to 85%, 2 to 80%, 5 to 70%, 2 to 50%, 2 to 40%, 2 to 30%, 2 to 20%, or 1 to 5% based on the total weight of the composition.

Aspect 26. The curable composition of any of Aspects 1 to 25, wherein the combined amount of the monomers of Formula (1) and Formula (2) is from 10 to 100 wt%, such as from 10 to 90 wt%, such as from 10 to 80 wt%, such as from 10 to 70 wt%, such as from 10 to 60 wt%, such as from 10 to 50 wt%, such as from 10 to 40 wt%, such as from 10 to 30 wt%, such as from 10 to 90 wt%, such as from 20 to 100 wt%, such as from 20 to 90 wt%, such as from 20 to 80 wt%, such as from 20 to 70 wt%, such as from 20 to 60 wt%, such as from 20 to 50 wt%, such as from 20 to 40 wt%, such as from 30 to 100 wt%, such as from 30 to 90 wt%, such as from 30 to 80 wt%, such as from 30 to 70 wt%, such as from 30 to 60 wt%, such as from 40 to 100 wt%, such as from 40 to 90 wt%, such as from 40 to 80 wt%, such as from 50 to 100 wt%, relative to the total weight of the polymerizable monomers present in the composition.

Aspect 27. The curable composition of any of Aspects 1 to 26, wherein the amount of ethylenically unsaturated monomers that are present in the curable composition (other than the monomer of Formula (1) and the monomer of Formula (2)) ranges from 1 to 99 wt%, such as from 1 to 95 wt%, such as from 1 to 90 wt%, such as 1 to 80 wt%, such as from 1 to 75 wt%, such as from 1 to 65 wt%, such as from 1 to 55 wt%, such as from 1 to 45 wt%, such as from 1 to 35 wt%, such as from 1 to 25 wt%, such as from 1 to 15 wt%, such as from 5 to 99 wt%, such as from 5 to 95 wt%, such as from 5 to 90 wt%, such as from 5 to 80 wt%, such as from 5 to 75 wt%, such as from 5 to 65 wt%, such as from 5 to 55 wt%, such as from 5 to 45 wt%, such as from 5 to 35 wt%, such as from 5 to 25 wt%, such as from 5 to 15 wt%, such as from 10 to 99 wt%, such as from 10 to 95 wt%, such as from 10 to 90 wt%, such as from 10 to 80 wt%, such as from 10 to 75 wt%, such as from 10 to 65 wt%, such as from 10 to 55 wt%, such as from 10 to 45 wt%, such as from 10 to 35 wt%, such as from 10 to 25 wt%, such as from 15 to 99 wt%, such as from 15 to 95 wt%, such as from 15 to 90 wt%, such as from 15 to 80 wt%, such as from 15 to 75 wt%, such as from 15 to 65 wt%, such as from 15 to 55 wt%, such as from 15 to 45 wt%, such as from 15 to 35 wt%, such as from 20 to 99 wt%, such as from 20 to 95 wt%, such as from 20 to 90 wt%, such as from 20 to 80 wt%, such as from 20 to 75 wt%, such as from 20 to 65 wt%, such as from 20 to 55 wt%, such as from 30 to 99 wt%, such as from 30 to 95 wt%, such as from 30 to 90 wt%, such as from 30 to 80 wt%, such as from 30 to 75 wt%, such as from 30 to 65 wt% relative to the total weight of the polymerizable monomers present.

Aspect 28. The curable composition of any of Aspects 1 to 27, wherein the curable composition contains less than 3 wt% of water, such as less than 1 wt%, such as less than 0.5 wt%, such as less than 0.2 wt%, such as less than 0.1 wt%, such as less than 0.01 wt%, such as 0 to 4 wt%, such as 0 to 1 wt%, such as 0 to 0.5 wt%, such as 0 to 0.1 wt%, such as 0 wt%, of water, relative to the total weight of the curable composition.

Aspect 29. A cured composition formed from the curable composition of any of Aspects 1 to 28.

Aspect 30. A substrate comprising the curable composition of any of Aspects 1 to 28.

Aspect 31. A substrate comprising the cured composition of Aspect 30.

Aspect 32. A method of increasing adhesion and/or corrosion resistance and/or water resistance of a curable coating composition applied to at least one surface of a substrate, the method comprising adding to the curable coating composition a monomer of Formula (1) and a monomer of Formula (2) as defined in any of Aspects 1 to 22, and curing the curable composition.

Aspect 33. A method of increasing corrosion resistance and/or water resistance of at least one surface of a substrate, the method comprising adding to the at least one surface a curable composition of any of Aspects 1 to 28, and curing the curable composition.

Aspect 34. A battery (e.g., an exterior surface of a battery) comprising the curable composition of any of Aspects 1 to 28.

Aspect 35. A battery (e.g., an exterior surface of a battery) comprising the cured composition of Aspect 29.

Aspect 36. A battery (e.g., an exterior surface of a battery) comprising a curable composition comprising the monomers of Formula (1) and Formula (2), and one or more of 1,2-dodecanediol dimethacrylate (DDDMA), isobornyl acrylate (IBOA), caprolactone acrylate (CAPA), wherein a molar ratio of the monomer of Formula (1) to the monomer of Formula (2) is at least 1.5:1, and wherein the curable composition is substantially free of water.

Aspect 37. A battery (e.g., an exterior surface of a battery) comprising a curable composition comprising the monomers of Formula (1) and Formula (2), and one or more oligomers comprising polyester acrylates, polyester-based aliphatic urethane diacrylates, polyether-based aliphatic urethane diacrylates and polybutadiene-based aliphatic urethane diacrylates, wherein a molar ratio of the monomer of Formula (1) to the monomer of Formula (2) is at least 1.5:1, and wherein the curable composition is substantially free of water.

Aspect 38. A battery (e.g., an exterior surface of a battery) comprising a curable composition comprising one or more acrylate oligomers, one or more acrylate monomers other than the monomers of Formula (1) and Formula (2), the monomers of Formula (1) and Formula (2), a photoinitiator and one or more fillers/additives, wherein a molar ratio of the monomer of Formula (1) to the monomer of Formula (2) is at least 1.5:1, and wherein the curable composition is substantially free of water.

Aspect 39. A battery (e.g., an exterior surface of a battery) comprising a curable composition comprising 20-60 wt% of an acrylate oligomer, 25-50 wt% of an acrylate monomer other than the monomers of Formula (1) and Formula (2), 1-5 wt% of the monomers of Formula (1) and Formula (2), and 0.5-3 wt% of a photoinitiator, based on the total weight of the curable composition, wherein a molar ratio of the monomer of Formula (1) to the monomer of Formula (2) is at least 1.5:1, wherein the curable composition is substantially free of water, and wherein the composition is organic solvent-free or alternatively, contains one or more organic solvents.

Aspect 40. The use of a curable composition of any of Aspects 1 to 28 for increasing corrosion resistance and/or scrub resistance and/or water resistance and/or adhesion and/or electric insulation and/or matting and/or flame retardancy and/or weathering resistance on at least one surface of a substrate.

Aspect 41. The use of a curable composition of any of Aspects 1 to 28 as a coating for at least one surface of a substrate.

### EXAMPLES

### Listing of Components

The following components are used in the examples.
SR833S: tricyclodecanedimethanol diacrylate (Sartomer)
HEMA: 2-hydroxyethyl methacrylate (Aldrich)
SR170: 2-hydroxyethyl methacrylate (Sartomer)
SR506A: isobornyl acrylate (Sartomer)
SR9054: Phosphoric acid 2-hydroxyethyl methacrylate (Sartomer)
SR210: polyethylene glycol dimethacrylate (Sartomer)
HEA: 2-hydroxyethyl acrylate (Aldrich)
CN963: difunctional urethane acrylate (Sartomer)
Speedcure BPO: phenyl bis(2,4,6-trimethylbenzoyl)- phosphine oxide (Sartomer)
Speedcure TPO-L: diphenyl (2,4,6-trimethylbenzoyl)phosphine oxide (Sartomer)
Speedcure 73: 2-hydroxy-2-methyl-1-phenylpropanone (Sartomer)
AEROSIL R805: silica fumed
TiO₂: titanium dioxide
Talc (Mg₃Si₄O₁₀(OH)₂)
P₂O₅: phosphorus pentoxide (Aldrich)

### Methods

### Aging Test / Electrolyte Soaking Test

Coated substrates underwent aging in both an environmental chamber at 85 °C/85% RH and through electrolyte soaking for a duration of up to 4 weeks. Testing on these aged samples took place right after the aging tests. The coated specimens that had been immersed in electrolyte solvents were dried using cleanroom wipes and alcohol prior to testing, where the electrolyte solvent mixture contained diethyl carbonate, dimethyl carbonate and ethylene carbonate in a 1:1:1 ratio.

### Viscosity Test

The viscosity of each composition was measured using a Brookfield rheometer at room temperature.

### Flexibility Test

The resistance to cracking of the coating was determined by bending fully cured coated panels at a 90-degree angle over a conical mandrel with a diameter ranging from 4 to 34 mm according to ISO 1519:2002.

### Adhesion Test

The adhesion of the coated resins to the underlying aluminum panel was evaluated according to ASTM Standard D3359 using crosshatch test. The crosshatch is rated on a 0 to 5 scale (with 5 being the highest adhesion strength) provided in the ASTM standard.

### Pencil Hardness

Pencil hardness testing as described in ISO 15184:1998 was used to assess the surface hardness of a material.

### Dielectric Breakdown Test

The breakdown strength of cured films was measured using the ASTM D-149 standard.

### Volume Resistivity Test

Volume resistivity was measured using a Keithley 6517B and 8009 fixture at room temperature via the ASTM D-257 standard.

### Lap Shear Test on Glass

Lap shear was measured using the ASTM C961 standard.

### Synthesis examples

### Example 1: Preparation of Phosphate Monomers of Formula (1) and Formula (2) Having Structures 3 and 4 (m=4)

71 gm phosphorus pentoxide (Aldrich) and 929 gm toluene were added into 3L 4-neck round bottom flask equipped with air sparge, agitator, thermocouple, temperature controller, heating mantle, side arm and addition funnel. 858 gm caprolactone modified 2-hydroxyethyl acrylate (where the average molar ratio of caprolactone : 2-hydroxyethyl acrylate = 4:1) was added through an addition funnel over 30 minutes with agitation while keeping the exothermic pot temperature at below 60°C. Agitation was continued for another 2 hours after all of the caprolactone modified 2-hydroxyethyl acrylate was added, followed by filtration of the mixture through filter paper to remove unreacted phosphorus pentoxide. The toluene was removed by vacuum distillation at a maximum 65°C/15 mm Hg to obtain 929 gm of a mixture of caprolactone modified 2-hydroxyethyl acrylate phosphate esters of structures 3 and 4 in a monoester to diester molar ratio of 2.45:1 as determined by ³¹P NMR.

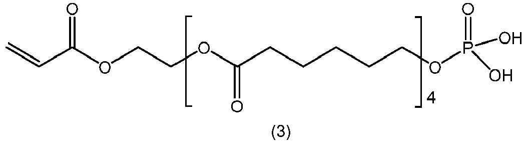

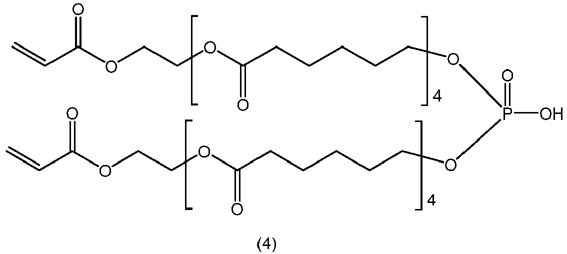

Analysis of the product mixture is provided below.

| Orthophosphate | |
|---|---|
| Total | 100.0 |
| H₃PO₄ | 3.2 |
| Monoester (structure 3) | 68.0 |
| Diester (structure 4) | 27.7 |
| Triester | 1.1 |
| Pyrophosphate | - |
| Total | - |
| H₄P₂O₇ | - |
| Monoester | - |
| Other esters | - |
| Polyphosphate | - |
| Cyclic phosphate impurities | - |

### Example 2: Preparation of Phosphate Monomers of Formula (1) and Formula (2) Having Structures 5 and 6 (m=1)

The phosphate monomers of Structures 5 and 6 were prepared similarly to the process described in Example 1, with the exception that a caprolactone modified 2-hydroxyethyl methacrylate (where the average molar ratio of caprolactone : 2-hydroxyethyl methacrylate = 1:1) was added to a mixture of phosphorus pentoxide and 50 wt% SR833S to obtain a mixture of caprolactone modified 2-hydroxymethyl acrylate phosphate esters of structures 5 and 6 in a monoester to diester molar ratio of 1.89:1 as determined by ³¹P NMR.

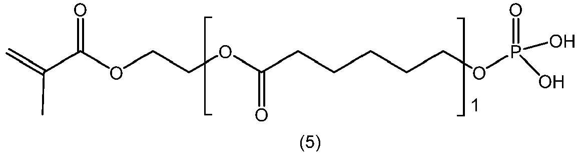

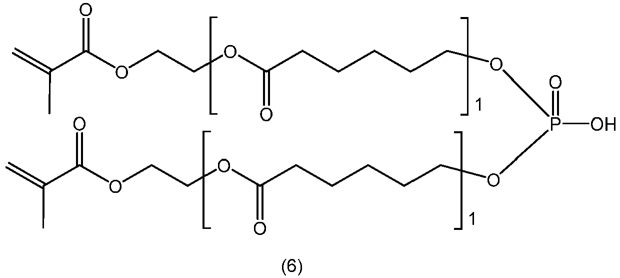

Analysis of the product mixture is provided below.

| Orthophosphate | |
|---|---|
| Total | 91.9 |
| H₃PO₄ | 4.7 |
| Monoester (structure 5) | 56.5 |
| Diester (structure 6) | 29.9 |
| Triester | 0.8 |

| Pyrophosphate | |
|---|---|
| Total | 8 |
| H₄P₂O₇ | 0.2 |
| Monoester | 1.1 |
| Other esters | 6.6 |
| Polyphosphate | - |
| Cyclic phosphate impurities | 0.1 |

### Example 2A: Preparation of Phosphate Monomers of Formula (1) and Formula (2) Having Structures 3 and 4 (m=4)

The phosphate monomers of Structures 3 and 4 were prepared by the process described in Example 2 to obtain a mixture of caprolactone modified 2-hydroxymethyl acrylate phosphate esters of structures 3 and 4 in a monoester to diester molar ratio of 3.08:1 as determined by ³¹P NMR.

### Example 3: Preparation of Phosphate Monomers of Formula (1) and Formula (2) Having Structures 7 and 8 (m=10)

The phosphate monomers of Structures 7 and 8 were prepared similarly to the process described in Example 1, (where the caprolactone modified 2-hydroxyethyl acrylate had an average molar ratio of caprolactone : 2-hydroxyethyl acrylate = 10:1) to obtain a mixture of caprolactone modified 2-hydroxymethyl acrylate phosphate esters of structures 7 and 8 in a monoester to diester molar ratio of 2.58:1 as determined by ³¹P NMR.

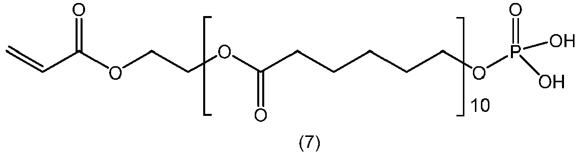

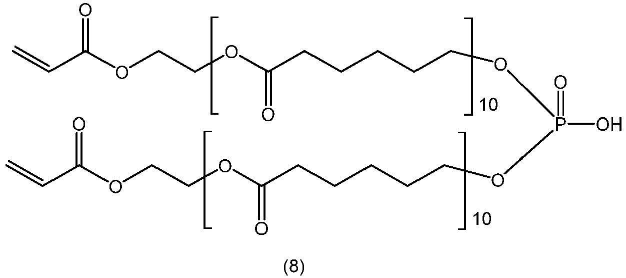

Analysis of the product mixture is provided below.

| Orthophosphate | |
|---|---|
| Total | 94.9 |
| H₃PO₄ | 5.5 |
| Monoester (structure 7) | 62.7 |
| Diester (structure 8) | 24.3 |
| Triester | 1.8 |
| Pyrophosphate | - |
| Total | 5.6 |
| H₄P₂O₇ | 0.1 |
| Monoester | 0.8 |
| Other esters | 4.7 |
| Polyphosphate | - |
| Cyclic phosphate impurities | - |

### Example 4: Formulation 1 (m=1).

To evaluate the performance of a composition of the invention comprising exemplary monomers of Formula (1) and Formula (2), a curable formulation was prepared that contained an epoxy acrylate oligomer, acrylate SR506A, diacrylate SR833S, caprolactone 2-hydroxyethyl methacrylate phosphates of structures 5 and 6 prepared as described in Example 2 in a monoester to diester molar ratio of 1.89:1, TiO₂, AEROSIL R805, talc, and SpeedCure BPO and SpeedCure 73 as photoinitiators.

### Example 5: Formulation 2 (m=4).

To evaluate the performance of a composition of the invention comprising exemplary monomers of Formula (1) and Formula (2), a curable formulation was prepared that contained an epoxy acrylate oligomer, acrylate SR506A, diacrylate SR833S, caprolactone 2-hydroxyethyl methacrylate phosphates similar to structures 5 and 6 except that m=4 instead of m=1 prepared by a process of Example 1 using P₂O₅/50% toluene, where the monoester:diester molar ratio was 2.45:1, TiO₂, AEROSIL R805, talc, and SpeedCure BPO and SpeedCure 73 as photoinitiators.

### Example 6: Formulation 3 (m=10).

To evaluate the performance of a composition of the invention comprising exemplary monomers of Formula (1) and Formula (2), a curable formulation was prepared that contained an epoxy acrylate oligomer, acrylate SR506A, diacrylate SR833S, caprolactone 2-hydroxyethyl methacrylate phosphates similar to structures 5 and 6 except that m=10 instead of m=1 prepared by a process of Example 1 using P₂O₅/78% toluene, where the monoester:diester molar ratio was 2.58:1, TiO₂, AEROSIL R805, talc, and SpeedCure BPO and SpeedCure 73 as photoinitiators.

### Example 7: Preparation of Curable Compositions.

To prepare the curable compositions of Formulations 1, 2 and 3 of Examples 4, 5 and 6, respectively, the epoxy acrylate oligomer, TiO₂, AEROSIL R805 and talc were added to a Flacktek^{®} polypropylene high-speed mixer cup and mixed for 2 minutes at 2000 rpm. A three roll mill was then employed for dispersing the TiO₂, AEROSIL R805, and talc fillers. After dispersion, acrylate SR506A, diacrylate SR833S, the Formula (1) and Formula (2) monomers, and the photoinitiators were added to the mixture of the oligomer and fillers and mixed again in the Flacktek cup for 5 minutes until the solution became homogenous. The resulting curable compositions are summarized in Table 1 below.

**Table 1**

| **Component** | **Formulation** | | |
|---|---|---|---|
| | **1** | **2** | **3** |
| | wt% | wt% | wt% |
| **Epoxy acrylate oligomer** | 27.33 | 27.38 | 24.49 |
| **SR833S (diacrylate)** | 44.00 | 44.08 | 39.42 |
| **Caprolactone 2-hydroxyethyl methacrylate phosphate monomer of Example 4 (m=1)** | 6.67 | - | - |
| **Caprolactone 2-hydroxyethyl methacrylate phosphate monomer of Example 5 (m=4)** | - | 6.53 | - |
| **Caprolactone 2-hydroxyethyl methacrylate phosphate monomer of Example 6 (m=10)** | - | - | 14.09 |
| **TiO₂** | 2 | 2 | 2 |
| **Talc** | 17 | 17 | 17 |
| **Aerosil R805** | 1 | 1 | 1 |
| **Speedcure BPO** | 1 | 1 | 1 |
| **Speedcure 73** | 1 | 1 | 1 |
| **TOTAL** | 100 | 100 | 100 |

### Example 8: Preparation of the Cured Compositions.

To one or more surfaces of a substrate (e.g., a metal substrate, e.g., aluminum) that was wiped sequentially with toluene and acetone, the curable composition of the invention was applied using a drawdown bar film applicator to a thickness of 60 µm. The composition was then cured using a UV-A LED lamp (395nm) and a fusion lamp (H bulb).

### Results

### Example 9: Testing of Formulations 1-3

The results of the testing of Formulation 1 appear in Table 2 below.

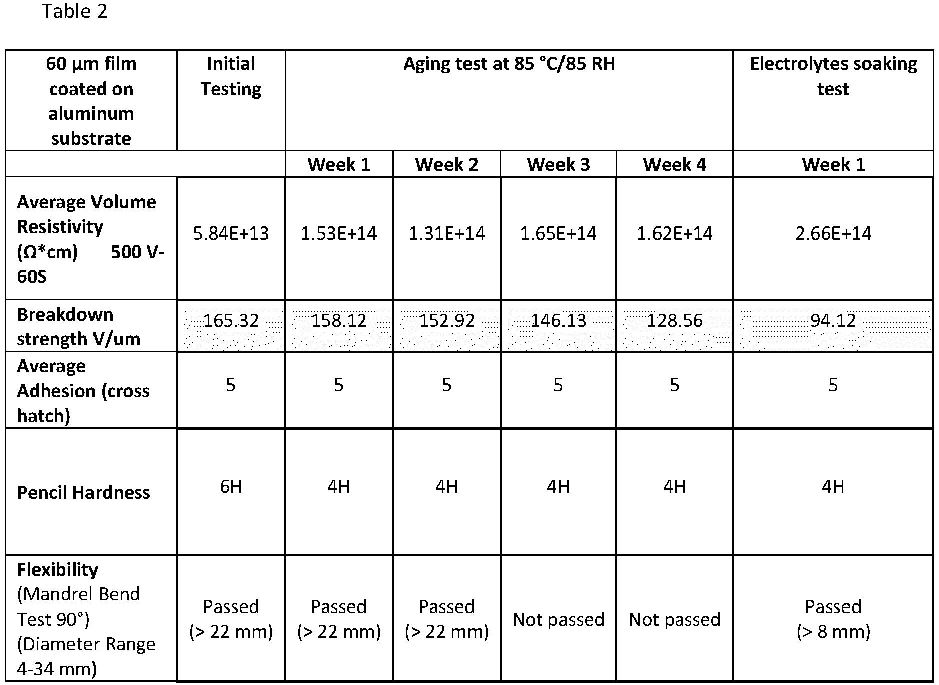

The results of the testing of Formulation 2 appear in Table 3 below.

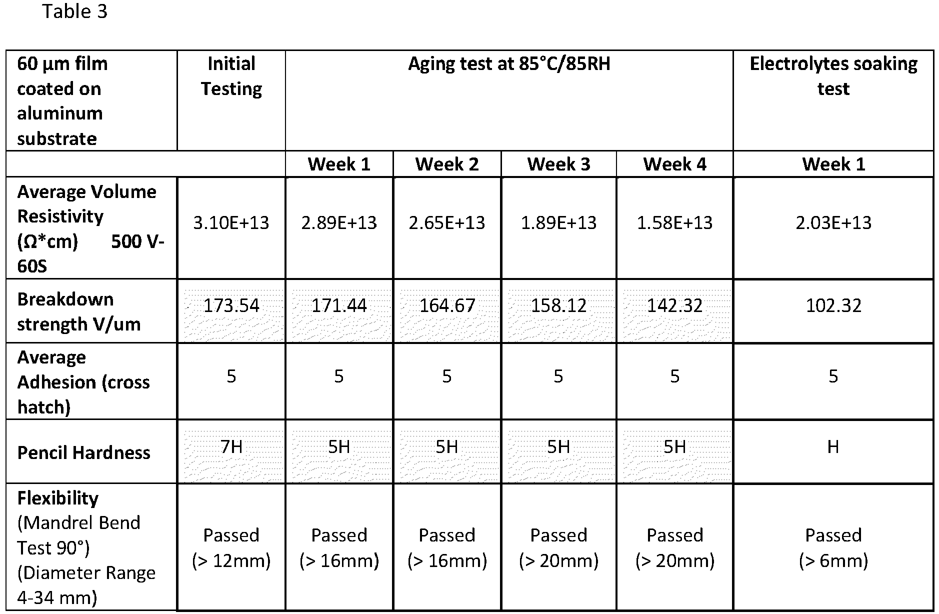

The results of the testing of Formulation 3 appear in Table 4 below.

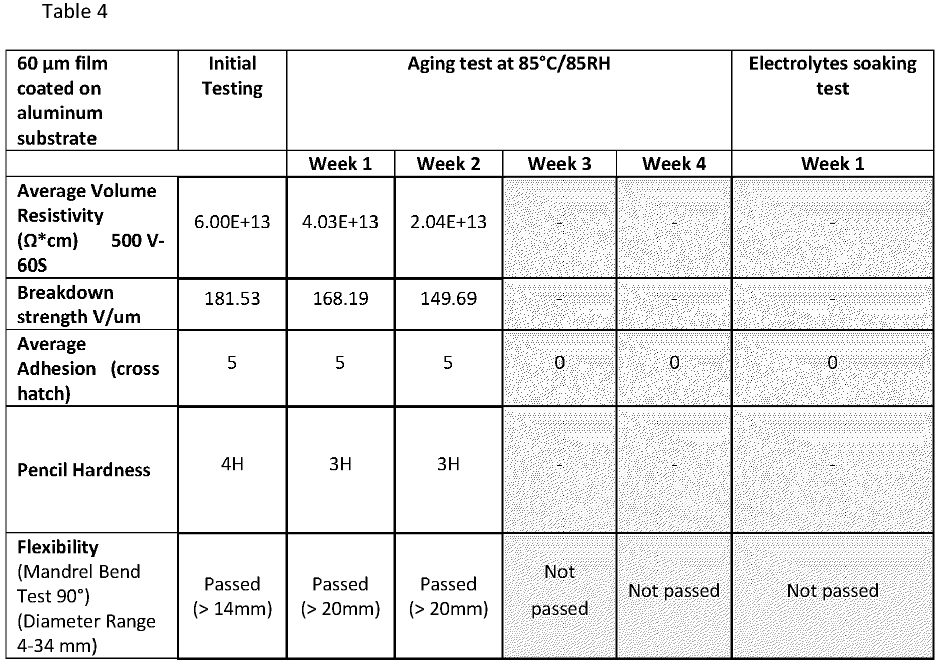

The results from Tables 2 through 4 demonstrate that each of Formulations 1, 2 and 3 exhibits superior adhesion and flexibility through two weeks after application to a surface, with Formulations 1 and 2 exhibiting superior adhesion through 4 weeks, and Formulation 2 also exhibiting superior flexibility through 4 weeks. A comparison to formulation not containing a - phosphate agent showed improvement resulting from the current invention in both adhesion and hardness.

### Example 10: Comparison Test for Adhesion to Glass.

The following compositions were tested for lap shear on glass: 67 wt% CN963, 15 wt% SR210, 15 wt% SR170, 3 wt% TPO-L ("Control"); Control + 5% phosphate acrylate SR9054 ("Comparative"); and Control + 8.2% phosphate monomers of Formula (1) and Formula (2) having structures 5 and 6 in a molar ratio of monoester to diester of 1.89 ("Inventive"). The inventive composition exhibited superior adhesion to glass compared to the Comparative composition (which contains a phosphate acrylate that is not of Formula (1) or Formula (2)) and to the Control. In particular, the lap shear strength of the inventive formulation was about 52,000 psi, whereas the lap shear strength of the comparative and control were 39,500 psi and 20,500 psi, respectively.

The invention as described is intended to cover not only individual aspects or exemplary embodiments of the invention but also combinations of all aspects and embodiments.

## Claims

1. A curable composition comprising a monomer of Formula (1) and a monomer of Formula (2) 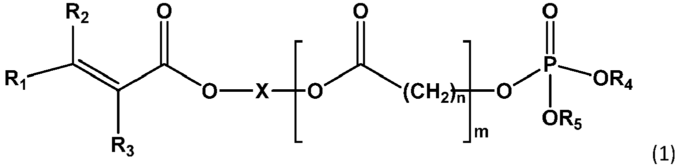 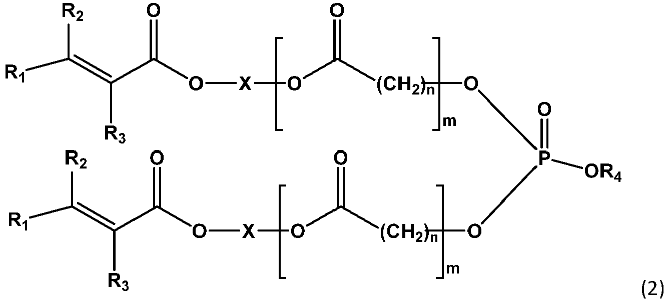 wherein in Formula (1) and Formula (2):
each R₁ is independently H or C₁-C₆ alkyl;
each R₂ is independently H or C₁-C₆ alkyl;
each R₃ is independently H or C₁-C₆ alkyl;
each X is independently C₁-C₆ alkylene, where a N, O or S atom may be inserted between any two carbon atoms present in the alkylene chain and where carbon atoms in the alkylene chain may be substituted with a C₁-C₃ alkyl group;
each R₄ is independently H or a cation;
each R₅ is independently H or a cation;
each n is independently 4 to 7; and
each m is independently 1 to 10,
wherein a molar ratio of the monomer of Formula (1) to the monomer of Formula (2) is at least 1.5:1, preferably at least 1.8:1, more preferably at least 2.0:1, and
wherein the curable composition is substantially free of water.

2. The curable composition according to claim 1, wherein X is selected from -CH₂-CH₂-, Formula (3) or Formula (4):
-(CR₆R'₆)ₑ- (3)
-[(CR₇R'₇)_{f}-O]_{g}-(CR₇R'₇)ₕ- (4)
wherein:
each R₆ and R'₆ is independently H or C₁-C₃ alkyl;
each R₇ and R'₇ is independently H or methyl;
e is an integer from 1 to 6;
f is an integer from 1 to 4;
g is an integer from 1 to 3;
h is an integer from 1 to 4; and
f + g + h ≤ 6.

3. The curable composition according to claim 1 or 2, wherein the cation of each of R₄ and R₅ is independently an ammonium group, a primary ammonium group, a secondary ammonium group, a tertiary ammonium group or a metal, and preferably is an ammonium group.

4. The curable composition according to any one of claims 1-3, wherein n is 5, m is 3 to 5 and X is -CH₂-CH₂-.

5. The curable composition according to any one of claims 1-4, further comprising at least one ethylenically unsaturated monomer, preferably at least two ethylenically unsaturated monomers, that are not monomers of Formula (1) or a monomer of Formula (2).

6. The curable composition according to any one of claims 1-5, further comprising one or more oligomers selected from epoxy (meth)acrylates, polyester (meth)acrylates, polyester-based aliphatic urethane di(meth)acrylates, polyether-based aliphatic urethane di(meth)acrylates and polybutadiene-based aliphatic urethane di(meth)acrylates.

7. The curable composition according to any one of claims 1-6, wherein the composition further comprises one or more additives selected from pigments, fillers, dispersants, rheology modifiers, wetting agents, defoamers, organic solvents, coalescing agents, neutralizers, and biocides.

8. The curable composition according to any one of claims 1-7, further comprising one or more (meth)acrylate oligomers, one or more (meth)acrylate monomers other than the monomers of Formula (1) and Formula (2), a photoinitiator and, optionally, one or more of a solvent, a filler, and an additive.

9. The curable composition according to claim 8, wherein the composition comprises:
20-60 wt% of at least one (meth)acrylate oligomer based on the total weight of the curable composition,
25-50 wt% of a (meth)acrylate monomer other than the monomers of Formula (1) and Formula (2) based on the total weight of the curable composition,
1-5 wt% of the monomers of Formula (1) and Formula (2) based on the total weight of the curable composition, and
0.5-3 wt% of a photoinitiator based on the total weight of the curable composition, optionally at least one of a solvent, a filler, and an additive.

10. A method of increasing corrosion resistance and/or scrub resistance and/or water resistance and/or adhesion and/or electric insulation and/or matting and/or flame retardancy and/or weathering resistance of at least one surface of a substrate, the method comprising applying to the least one surface a curable composition as defined in any one of claims 1-9, and curing the curable composition.

11. A cured composition formed from the curable composition according to any one of claims 1-10.

12. Use of the curable composition according to any one of claims 1-9 as a coating for at least one surface of a substrate.

13. The use according to claim 12, wherein the substrate is an exterior surface of a battery.

14. Use of the curable composition according to any one of claims 1-9 for increasing corrosion resistance and/or water resistance and/or adhesion and/or electric insulation and/or matting and/or flame retardancy and/or weathering resistance on each surface of a substrate on which the curable composition is applied.

15. The use according to claim 14, wherein the substrate is a surface of a battery.
